# EUROPEAN PATENT SPECIFICATION

(11) **EP 4 094 599 B1**
(45) Date of publication and mention of the grant of the patent: **11.02.2026**
(21) Application number: 20932920.0
(22) Date of filing: 28.04.2020
(51) Int. Cl.: A24F 40/40

(54) **SUCTION DEVICE**
SAUGVORRICHTUNG
DISPOSITIF D'ASPIRATION

(43) Date of publication of application: 30.11.2022
(73) Proprietor: Japan Tobacco Inc., Tokyo 105-6927 (JP)
(72) Inventor: YAMADA, Kentaro, Tokyo 130-8603 (JP)
(74) Representative: Hoffmann Eitle
(86) International application number: PCT/JP2020/018087
(87) International publication number: WO 2021/220392

(56) References cited:
- EP-A1- 3 399 875
- EP-A1- 3 794 991
- CN-A- 107 432 498
- JP-A- 2019 518 421
- US-A1- 2015 351 455
- US-A1- 2017 332 701

## Description

### TECHNICAL FIELD

The present invention relates to a suction device.

### BACKGROUND ART

Conventionally, suction devices for sucking flavor or the like without burning the material have been known. As such a suction device, for example, a smoking material heating device that forms an aerosol by heating a smoking material including tobacco containing a volatile component is known (see, for example, JP 2019-518421 A). The device disclosed in JP 2019-518421 A includes a housing that houses a control circuit, a power supply, and a heater. The housing includes a partition wall separating a heating compartment, which houses the heater, from an electrical equipment compartment, which houses the control circuit or power supply.

EP 3 399 875 A1 relates to an aerosol-generating system comprising a disabling mechanism configured to render at least one of the storage portion, the aerosol generator, and the one or more air passages irreversibly inoperable. US 2015/351455 A1 discloses an electronic cigarette of which a battery is separated from a main rod body, the electronic cigarette comprising a battery detachment system.

### SUMMARY OF INVENTION

### TECHNICAL PROBLEM

When a device includes a chamber to house a power supply, as in the device disclosed in JP 2019-518421 A, there is a possibility that the pressure in the chamber increases when the power supply fails. To prepare for such a case, it is conceivable to provide a hole in the wall that forms the chamber housing the power supply so as to release the increased pressure in the room.

On the other hand, when the power supply is a battery containing an electrolyte, such as a lithium-ion battery, the electrolyte may leak from the battery when the battery fails. In this case, there is a possibility that the electrolyte leaks out of the chamber housing the battery through the hole for pressure relief. In particular, when the control circuit is disposed outside the chamber housing the battery, there is a possibility that the electrolyte comes into contact with the control circuit and cause a short circuit in the control circuit, which results in abnormal operation of the device. Further, when electrical equipment such as a heater, a sensor, or a vibrator is disposed outside the chamber housing the battery, when the electrolyte comes into contact with such electrical equipment and causes a short circuit, there is a possibility that the control circuit connected to the electrical equipment fails secondarily. Moreover, when a tape is used to secure the electrical equipment outside the chamber housing the battery, there is a possibility that the electrolyte comes into contact with the tape and causes the tape to be separated.

The present invention has been made in view of the above-mentioned conventional problems, and one of its objects is to prevent electrolyte contained in a power supply from leaking out of a chamber housing the power supply.

### SOLUTION TO PROBLEM

According to an aspect of the present invention, a suction device is provided. The suction device includes an aerosol generation unit, a control unit that controls the aerosol generation unit, a battery that supplies power to the aerosol generation unit and the control unit, a partition wall that separates an electrical equipment compartment that houses electrical equipment from a battery compartment that houses at least the battery, and a buffer member that is disposed between the battery and the partition wall. The buffer member includes a slit. The partition wall includes a through-hole that communicates the electrical equipment compartment with the battery compartment. The through-hole of the partition wall is in air communication with the slit of the buffer member. The slit is a cut extending through the buffer member in the thickness direction and extends along the plane of the buffer member.

### BRIEF DESCRIPTION OF DRAWINGS

Fig. 1A is an overall perspective view of a suction device according to the present embodiment.
Fig. 1B is an overall perspective view of the suction device according to the present embodiment with a flavor-generating article being held.
Fig. 2 is a cross-sectional view taken along arrow 3-3 illustrated in Fig. 1A.
Fig. 3 is a schematic plan view of a first portion of a partition wall.
Fig. 4 is a plane view of a buffer member.

### DESCRIPTION OF EMBODIMENTS

An embodiment of the present invention will be described below with reference to the drawings. In the drawings described below, identical or equivalent components are designated with identical symbols, and redundant description will be omitted.

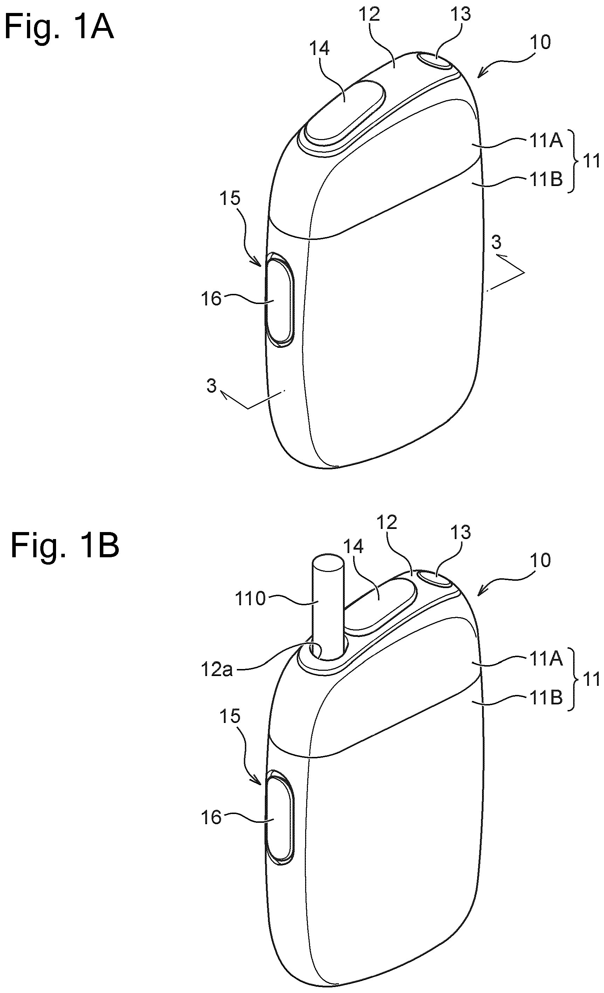

Fig. 1A is an overall perspective view of a suction device according to the present embodiment. Fig. 1B is an overall perspective view of the suction device according to the present embodiment with a flavor-generating article being held. A suction device 10 according to the present embodiment is configured, for example, to heat a flavor-generating article 110 containing a smokable substance containing an aerosol source to generate an aerosol containing flavor.

As illustrated in Figs. 1A and Fig. 1B, the suction device 10 includes a top housing 11A, a bottom housing 11B, a cover 12, a switch 13, a lid 14, a second air inlet 15, and a cap 16. The top housing 11A and the bottom housing 11B, when connected to each other, constitute an outermost outer housing 11 of the suction device 10. The outer housing 11 is sized to fit in a user's hand. When using the suction device 10, the user can hold the suction device 10 by hand and suck the flavor.

The top housing 11A includes an opening, which is not illustrated. The cover 12 is coupled to the top housing 11A to close the opening and can constitute a part of the housing. As illustrated in Fig. 1B, the cover 12 includes an opening 12a into which the flavor-generating article 110 can be inserted. The lid 14 is configured to open and close the opening 12a of the cover 12. Specifically, the lid 14 is attached to the cover 12 and configured to be movable along the surface of the cover 12 between a first position for closing the opening 12a and a second position for opening the opening 12a. Thus, the lid 14 can allow or restrict access of the flavor-generating article 110 to the interior of the suction device 10.

The switch 13 is used to turn on and off the operation of the suction device 10. For example, as illustrated in Fig. 1B, by operating the switch 13 with the flavor-generating article 110 inserted into the opening 12a, the user can heat the flavor-generating article 110 without burning it by supplying power to a heating unit, which is not illustrated, from a power supply, which is not illustrated. When the flavor-generating article 110 is heated, the user can suck the flavor by holding a portion of the flavor-generating article 110 protruding from the suction device 10 in the mouth (a portion illustrated in Fig. 1B).

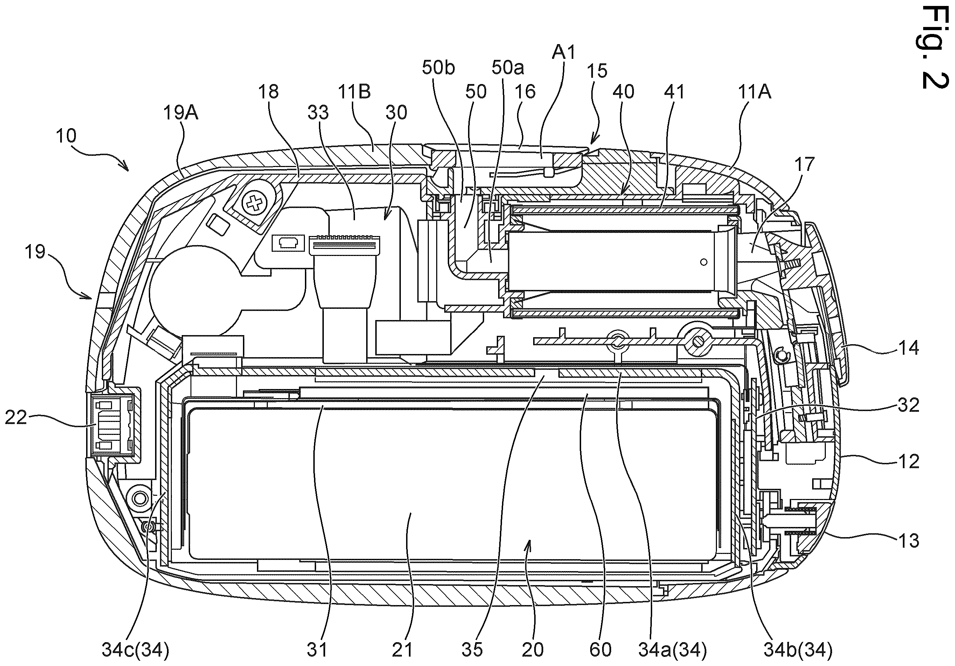

The second air inlet 15 is a vent for introducing air into the interior of a heating assembly 41 (see Fig. 2), which is housed in the inner space of the outer housing 11. The cap 16 is configured to be attachable to and detachable from the bottom housing 11B. When the cap 16 is attached to the bottom housing 11B, the second air inlet 15 is formed between the bottom housing 11B and the cap 16. The cap 16 can have, for example, a through-hole or notch, which is not illustrated. Note that, in the present specification, the longitudinal direction of the suction device 10 refers to the direction in which the flavor-generating article 110 is inserted into the opening 12a. Further, in the suction device 10 of the present specification, the side where fluid such as air flows in (for example, second air inlet 15 side) is the upstream side, and the side where fluid leaks out (for example, opening 12a side) is the downstream side.

The flavor-generating article 110 includes a smokable substance to be heated. The smokable substance may be wrapped by a breathable first paper roll. The first paper roll may be provided with a lid that is breathable and prevents the smokable substance from falling out. The lid may be glued to the first paper roll or fixed to the first paper roll by friction. The lid can be, for example, a paper filter or an acetate filter. The flavor-generating article 110 may include a cylindrical member. The cylindrical member can be a paper tube or a hollow filter.

The hollow filter can include a fill layer including one or a plurality of hollow channels and a plug wrapper covering the fill layer. The fill layer has a high fiber fill density, so that air and aerosol flow only through the hollow channels during suction, and rarely flows in the fill layer. The hollow filter may include a mouthpiece including adjacent filter portions or the like.

The length in the longitudinal direction of the smokable substance contained in the flavor-generating article 110 is preferably 40 mm to 90 mm, more preferably 50 mm to 75 mm, and further preferably 50 mm to 60 mm. The circumference of the smokable substance is preferably 15 mm to 25 mm, more preferably 17 mm to 24 mm, further preferably 20 mm to 23 mm. Further, the length of the smokable substance may be 12 mm to 22 mm, the length of the first paper roll may be 12 mm to 22 mm, the length of the hollow filter may be 7 mm to 26 mm, and the length of the filter portion may be 6 mm to 20 mm.

The smokable substance contained in the flavor-generating article 110 can contain an aerosol source that generates aerosol when heated at a predetermined temperature. The type of aerosol source is not particularly limited, and extracted substances from various natural products and/or their constituent components can be selected according to the usage. Examples of the aerosol source can include glycerin, propyleneglycol, triacetin, 1,3-butanediol, and a mixture thereof. The content of the aerosol source in the solid smokable substance (weight% to the total weight of the smokable substance) is not particularly limited, but from the viewpoint of generating sufficient aerosol and imparting a favorable flavor and taste, is usually 5 weight% or more, preferably 10 weight% or more, and is usually 50 weight% or less, preferably 20 weight% or less.

As the smokable substance, tobacco such as lamina, midrib, or other known plants can be used. Further, the shape of the smokable substance, such as tobacco, may be in the cut form, in the form of sheets, strings, powders, granules, pellets, slurries, or porous materials. The range of content of smokable substance such as tobacco in the flavor-generating article 110 is, for example, from 200 mg to 400 mg, preferably from 250 mg to 320 mg when the size of smokable substance is 20 mm to 23 mm in circumference and 18 mm to 22 mm in length. The moisture content (weight% to the total weight of the smokable substance) of the smokable substance containing tobacco or the like as a smokable substance is preferably, for example, 8 weight% to 18 weight% and 10 weight% to 16 weight%. This moisture content suppresses the occurrence of stains on the roll and improves the rollability during manufacturing. There are no restrictions on the size of cut tobacco used as an example of the smokable substance or its preparation method. For example, dried tobacco leaves cut into the width of 0.8 mm to 1.2 mm may be used. Further, dried tobacco leaves crushed and homogenized to an average particle size of 20 µm to 200 µm, and then formed into sheets and cut to the width of 0.8 mm to 1.2 mm may be used. Moreover, the above that has been formed into the sheet that is not cut but gathered may be used as the smokable substance. Moreover, the smokable substance may be liquid and the liquid may have viscosity, and in this case the smokable substance may be predominantly an aerosol source. The content of aerosol source in the liquid smokable substance (weight% to the total weight of the smokable substance) can be 80 weight% or more, 90 weight% or more, or 95 weight% or more. Further, the smokable substance may contain one type or two types or more flavor materials. The type of the flavor material is not particularly limited, but, from the viewpoint of imparting a favorable taste, is preferably menthol.

The flavor-generating article 110 may have a second paper roll that is different from the first paper roll and wraps at least one of a cylindrical member, a hollow filter portion, and a filter portion. The second paper roll may wrap a part of the first paper roll that wraps the smokable substance. The first paper roll and the second paper roll of the flavor-generating article 110 can be made of base paper with a basis weight of, for example, 20 gsm to 65 gsm. The thickness of the first paper roll and the second paper roll is not particularly limited, but, from the viewpoint of rigidity, breathability, and ease of adjustment during papermaking, is preferably 10 µm to 100 µm.

The first paper roll and the second paper roll of the flavor-generating article 110 can include a loading material. The content of the loading material can be 10 weight% to 60 weight%, preferably 15 weight% to 45 weight% to the total weight of the first paper roll and the second paper roll. For the preferable basis weight range (25 gsm to 45 gsm), the loading material is preferably 15 weight% to 45 weight%. As the loading material, for example, calcium carbonate, titanium dioxide, kaolin, or the like can be used. Paper containing such loading material has a bright white color, which is preferable from the viewpoint of appearance when used as a paper roll for the flavor-generating article 110, and can retain whiteness permanently. For example, the ISO whiteness of paper roll can be increased to 83% or more by including a large amount of such loading material. Further, from the viewpoint of practical use as a paper roll for the flavor-generating article 110, the first paper roll and the second paper roll preferably have a tensile strength of 8N/15 mm or higher. This tensile strength can be increased by reducing the content of the loading material. Specifically, the tensile strength can be increased by reducing the content of the loading material below the upper limit of the content of the loading material in the basis weight ranges described above.

Next, the internal structure of the suction device 10 illustrated in Figs. 1A and 1B is described. Fig. 2 is a cross-sectional view taken along arrow 3-3 illustrated in Fig. 1A. As illustrated Fig. 2, the suction device 10 includes an inner housing 18 provided inside the outer housing 11. In the inner space of the inner housing 18, a power supply unit 20, a circuit unit 30 (corresponding to an example of the control unit), and a heating device 40 (corresponding to an example of the aerosol generation unit) are provided.

As illustrated, the heating device 40 includes a heating assembly 41 extending in the longitudinal direction, a curved tube 50 having a substantially L-shape in cross-section, and an insertion guide member 17 having a substantially cylindrical shape. The heating assembly 41 includes a plurality of cylindrical members, forming a cylindrical body as a whole. The heating assembly 41 constitutes a heating chamber that can house a part of the flavor-generating article 110 inside, and a function to define a flow path of air supplied to the flavor-generating article 110, and a function to heat the flavor-generating article 110 inserted through the opening 12a (see Fig. 1B) from the periphery. The insertion guide member 17 is formed, for example, of a resin material and is provided between the cover 12 including the opening 12a (see Fig. 1B) and the downstream end of the heating assembly 41 to guide insertion of the flavor-generating article 110 into the heating assembly 41.

The curved pipe 50 is formed, for example, of resin material. The curved pipe 50 includes a first end 50a and a second end 50b. The first end 50a of the curved pipe 50 is connected to the upstream end of the heating assembly 41, i.e., the end opposite to the opening 12a (see Fig. 1B). The second end 50b opens at an angle relative to the longitudinal direction of the heating chamber of the heating assembly 41. Specifically, as described above, in the present embodiment, since the curved pipe 50 has an L-shape, the second end 50b opens in a direction substantially orthogonal to the longitudinal direction of the heating chamber of the heating assembly 41. As a result, the second end 50b is located opposite the cap 16 attached to the bottom housing 11B. The curved pipe 50 introduces air supplied from the second end 50b into the heating chamber of the heating assembly 41 via the first end 50a.

As illustrated, with the cap 16 attached to the outer housing 11, a predetermined space A1 is formed between the cap 16 and the inner housing 18. The second end 50b of the curved pipe 50 is in communication with the space A1. When the cap 16 is removed from the outer housing 11, the interior of the curved pipe 50 is accessible from the second end 50b. Therefore, the cap 16 is removed from the outer housing 11, and the interior of the curved pipe 50 can be cleaned, for example, with any cleaning tool.

In the bottom housing 11B, a first air inlet 19 and the second air inlet 15 are formed to introduce air into the heating assembly 41. The first air inlet 19 is formed on the bottom side of the bottom housing 11B. The first air inlet 19 is always open, without being covered by a cap or the like.

Further, the second air inlet 15 is formed on a side surface of the bottom housing 11B. More specifically, the first air inlet 19 is provided on a side distal to the opening 12a (see Fig. 1B) with respect to the second air inlet 15.

A flow path 19A in communication with the first air inlet 19 is formed between the outer housing 11 and the inner housing 18. As illustrated, the flow path 19A communicates the first air inlet 19 with the space A1. Thus, air flowing from the first air inlet 19 is supplied to the heating chamber of the heating assembly 41 through the flow path 19A, the space A1, and the curved pipe 50.

The second air inlet 15 is a vent formed in the gap between the cap 16 and the outer housing 11, and is in communication with the space A1. Thus, air flowing from the second air inlet 15 is supplied to the heating chamber of the heating assembly 41 through the space A1 and the curved pipe 50.

As illustrated in Fig. 1B, when the flavor-generating article 110 is inserted into the interior of the suction device 10 through the opening 12a of the cover 12, it passes through the insertion guide member 17 and a portion of the flavor-generating article 110 is disposed inside the heating assembly 41.

As illustrated Fig. 1B, with the flavor-generating article 110 inserted into the suction device 10 through the opening 12a, when the user puts the portion of the flavor-generating article 110 protruding from the suction device 10 in the mouth and sucks, air flows into the heating assembly 41 from the first air inlet 19 and the second air inlet 15. The flowing air passes through the interior of the heating assembly 41 and reaches the user's mouth with the aerosol produced by the flavor-generating article 110.

The circuit unit 30 is configured to control the heating device 40. Specifically, the circuit unit 30 includes a first circuit board 31, a second circuit board 32, and a third circuit board 33, electrically connected to each other. For example, as illustrated, the first circuit board 31 is disposed longitudinally extending adjacent to one surface of a battery 21 having a substantially columnar shape as illustrated.

The second circuit board 32 is disposed inside the top housing 11A between the cover 12 and the power supply unit 20 and extends in a direction perpendicular to the extension direction of the first circuit board 31. The switch 13 is disposed adjacent to the second circuit board 32. When the user presses the switch 13, a part of the switch 13 can come into contact with the second circuit board 32. The third circuit board 33 is disposed to longitudinally extend in a space formed on a side opposite to the opening 12a (see Fig. 1B) with respect to the heating device 40.

The first circuit board 31, the second circuit board 32, and the third circuit board 33 include, for example, a microprocessor and can control the supply of power from the power supply unit 20 to the heating device 40. Thus, the first circuit board 31, the second circuit board 32, and the third circuit board 33 can control heating of the flavor-generating article 110 by the heating device 40.

The power supply unit 20 includes the battery 21 electrically connected to the first circuit board 31, the second circuit board 32, and the third circuit board 33. The battery 21 can be, for example, a rechargeable battery such as a lithium-ion battery, or a non-rechargeable battery. The battery 21 is electrically connected to the heating device 40 via at least one of the first circuit board 31, the second circuit board 32, and the third circuit board 33. Thus, the battery 21 can supply power to the circuit unit 30 and the heating device 40 so that the flavor-generating article 110 is properly heated. Further, as illustrated, the battery 21 and the heating device 40 are disposed in parallel with each other and adjacent each other in a direction orthogonal to the longitudinal direction. Thus, even when the size of the battery 21 is increased, an increase in length of the suction device 10 in the longitudinal direction can be suppressed.

Further, the suction device 10 includes a terminal 22 that can be connected to an external power supply. The terminal 22 can be connected to a cable, e.g. micro USB. When the battery 21 is a rechargeable battery, an external power supply can be connected to the terminal 22 to supply power to the battery 21 from the external power supply and charge the battery 21. Further, by connecting a data transmission cable such as micro USB to the terminal 22, data related to the operation of the suction device 10 may be transmitted to an external device.

A partition wall 34 is provided between the battery 21 and the heating device 40, the second circuit board 32, and the third circuit board 33, and thus a battery compartment housing the battery 21 of the power supply unit 20 is separated from an electrical equipment compartment where the heating device 40, the circuit unit 30, and other electrical equipment, which is not illustrated, are disposed. Specifically, the partition wall 34 is a plate-shaped wall curved in a substantially C-shape in cross section, and includes a first portion 34a, a second portion 34b, and a third portion 34c, as illustrated in Fig. 2. The first portion 34a is a part of the partition wall 34 that partitions the battery 21 from the heating device 40 and the third circuit board 33. The second portion 34b is a part of the partition wall 34 that partitions the battery 21 from the second circuit board 32. The third portion 34c is a part of the partition wall 34 that partitions the battery 21 from the terminal 22 to be described below. Note that, in the present specification, the electrical equipment includes equipment used in the suction device 10 and through which current flows, such as the heating device 40, the circuit unit 30, the terminal 22, a vibrator, which is not illustrated, and a sensor, which is not illustrated.

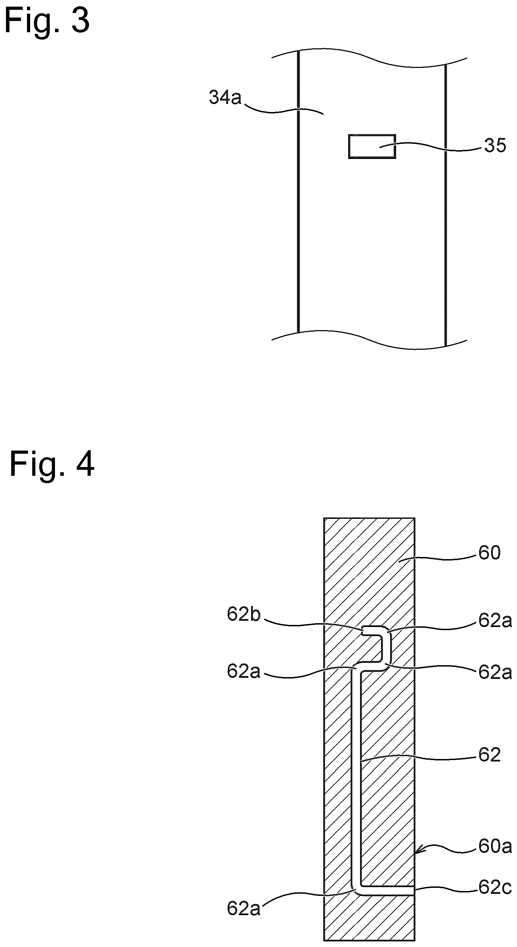

The partition wall 34 includes a through-hole 35 that communicates the electrical equipment compartment with the battery compartment. Fig. 3 is a schematic plan view of the first portion 34a of the partition wall 34. In the present embodiment, the through-hole 35 is provided in the first portion 34a of the partition wall 34, but not limited to this, and may be provided in the second portion 34b or third portion 34c. The through-hole 35 can release the pressure in the battery compartment that has increased due to occurrence of failure in the battery 21 into the electrical equipment compartment. Note that, in the present specification, the through-hole 35 can also include a notch. Further, in the present embodiment, the circuit unit 30 includes the first circuit board 31, the second circuit board 32, and the third circuit board 33, but is not limited to this, and may include at least one of the first circuit board 31, the second circuit board 32, or the third circuit board 33.

Between the battery 21 and the partition wall 34, a buffer member 60 is disposed. The buffer member 60 can be attached to the surface of the partition wall 34 or battery 21 to alleviate the impact on the battery 21 when the suction device 10 is in use. The buffer member 60 is preferably in contact with both the partition wall 34 and the battery 21. In the present embodiment, the buffer member 60 is disposed between the battery 21 and the first portion 34a of the partition wall 34, but is not limited to this, and may be disposed between the battery 21 and the second portion 34b or third portion 34c of the partition wall 34. Moreover, the buffer member 60 may be disposed between the battery 21 and the inner housing 18.

Fig. 4 is a plan view of the buffer member 60. As illustrated, the buffer member 60 has a substantially rectangular planar shape. As described above, when the power supply unit 20 includes the battery 21 containing electrolyte, the electrolyte can leak from the battery 21 when the battery 21 fails. In this case, there is a possibility that the electrolyte leaks from the battery compartment housing the battery 21 of the power supply unit 20 to the electrical equipment compartment where the circuit unit 30 and the like are disposed through the through-hole 35 in the partition wall 34. Thus, the buffer member 60 of the present embodiment includes a slit 62. The slit 62 is a cut extending through the buffer member 60 in the thickness direction and extends along the plane of the buffer member 60. Thus, the electrolyte reaching the slit 62 of the buffer member 60 is held in the slit 62 by the surface tension of the electrolyte, and the electrolyte can be prevented from leaking through the through-hole 35 of the partition wall 34.

Further, the slit 62 of the present embodiment is provided in air communication with the through-hole 35 formed in the partition wall 34. Specifically, for example, the buffer member 60 and the through-hole 35 are aligned so that the slit 62 and the through-hole 35 face each other. Thus, the through-hole 35 is prevented from being completely closed by the buffer member 60, which prevents the pressure in the battery compartment housing the battery 21 from increasing.

The slit 62 may be straight in plan view, but preferably includes at least one bend 62a. Thus, since the slit 62 can be made longer than when the slit 62 is straight, the amount of electrolyte held in the slit 62 can be increased, further preventing the electrolyte from leaking through the through-hole 35 in the partition wall 34. In the present embodiment, the slit 62 includes four bends 62a and is formed to include a substantially S-shaped portion. The shape of the slit 62 in plan view is not limited to this, and the slit 62 can include a portion of any shape having at least one bend 62a, for example, a zigzag-shaped (Z-shaped) portion, an undulate (sinusoidal, square wave, triangular wave, or the like) portion, an L-shaped portion, a C-shaped portion. Further, the buffer member 60 may include a plurality of slits 62.

The slit 62 includes a first end 62b (corresponding to an example of the terminal portion) and a second end 62c. As illustrated, the second end 62c extends to an end face 60a of the buffer member 60. In other words, the second end 62c of the slit 62 is opened to the end face 60a of the buffer member 60. Thus, the through-hole 35 formed in the partition wall 34 can be communicated with the battery compartment housing the battery 21 via the slit 62, so that when the pressure in the battery compartment increases, the pressure (gas) can be efficiently released to the electrical equipment compartment via the slit 62 and the through-hole 35. As a result, an increase in pressure in the battery compartment can be further suppressed. Note that the first end 62b of the slit 62 may also extend to any end face of the buffer member 60.

Further, the first end 62b of the slit 62 is terminated in the buffer member 60. The buffer member 60 can be disposed between the battery 21 and the partition wall 34 so that the first end 62b of the slit 62 and the through-hole 35 of the partition wall 34 face each other.

The width of the slit 62 is preferably, for example, 0.7 mm or more and 1.5 mm or less. When the width of the slit 62 is less than 0.7 mm, the amount of electrolyte that the slit 62 can hold can be insufficient. Further, when the width of the slit 62 is more than 1.5 mm, there is a possibility that the electrolyte leaks from the slit 62. Accordingly, when the width of the slit 62 is within the above range, the slit 62 can hold the electrolyte properly.

The buffer member 60 is preferably formed of a material having a closed-cell structure (e.g., polyurethane or the like). The buffer member 60, when formed of a material having a closed-cell structure, is substantially impermeable to gases and liquids, but is configured to be capable of absorbing liquids due to bubbles exposed on the surface of the buffer member 60. Thus, the electrolyte can be held by the slit 62 and the buffer member 60 itself, while preventing the electrolyte from passing through the buffer member 60 and leaking through the through-hole 35. Further, when the buffer member 60 is formed of a material having a closed-cell structure, it expands by absorbing the electrolyte. At this time, the expansion of the buffer member 60 causes the slit 62 to be closed or the width of the slit 62 to decrease, making it difficult for the electrolyte to pass through the slit 62. As a result, the electrolyte is further prevented from leaking through the through-hole 35.

As described above, since in the suction device 10 according to the present embodiment, the buffer member 60 disposed between the partition wall 34 and the battery 21 includes the slit 62, the electrolyte reaching the slit 62 of the buffer member 60 is held in the slit 62 by the surface tension of the electrolyte, and the electrolyte can be prevented from leaking through the through-hole 35 of the partition wall 34. Further, since the buffer member 60 is provided so that the slit 62 is in air communication with the through-hole 35 formed in the partition wall 34, the through-hole 35 is prevented from being completely closed by the buffer member 60 and an increase in the pressure in the battery compartment housing the battery 21 can be suppressed.

Although the embodiment of the present invention has been described above, the present invention is not limited to the above embodiment, and various modifications are possible within the scope of the claims.

According to the tenth aspect, the through-hole formed in the partition wall can be communicated with the battery compartment housing the battery via the slit, so that when the pressure in the battery compartment increases, the pressure (gas) can be efficiently released to the electrical equipment compartment via the slit and the through-hole. As a result, an increase in pressure in the battery compartment can be further suppressed.

### REFERENCE SIGNS LIST

- 10: suction device
- 21: battery
- 30: circuit unit
- 34: partition wall
- 35: through-hole
- 40: heating device
- 60: buffer member
- 60a: end face
- 62: slit
- 62a: bend
- 62b: first end
- 62c: second end

## Claims

1. A suction device (10) comprising:
an aerosol generation unit (40);
a control unit (30) configured to control the aerosol generation unit (40);
a battery (21) configured to supply power to the aerosol generation unit (40) and the control unit (30);
a partition wall (34) configured to partition an electrical equipment compartment housing electrical equipment from a battery compartment housing at least the battery (21); and
a buffer member (60) configured to be disposed between the battery (21) and the partition wall (34),
wherein
the buffer member (60) includes a slit (62),
the partition wall (34) includes a through-hole (35) communicating the electrical equipment compartment with the battery compartment,
the through-hole (35) of the partition wall (34) is in air communication with the slit (62) of the buffer member (60), and
the slit (62) is a cut extending through the buffer member (60) in the thickness direction and extends along the plane of the buffer member (60).

2. The suction device (10) according to claim 1, wherein the buffer member (60) is configured to be capable of absorbing liquid.

3. The suction device (10) according to claim 1 or 2, wherein the buffer member (60) is configured to expand when absorbing liquid.

4. The suction device (10) according to any one of claims 1 to 3, wherein the slit (62) includes at least one bend (62a).

5. The suction device (10) according to any one of claims 1 to 4, wherein the slit (62) includes an S-shaped portion.

6. The suction device (10) according to any one of claims 1 to 4, wherein the slit (62) includes a zigzag-shaped portion.

7. The suction device (10) according to any one of claims 1 to 6, wherein the slit (62) includes a terminal portion (62b).

8. The suction device (10) according to any one of claims 1 to 7, wherein the buffer member (60) includes a closed-cell structure.

9. The suction device (10) according to any one of claims 1 to 8, wherein a width of the slit (62) is 0.7 mm or more and 1.5 mm or less.

10. The suction device (10) according to any one of claims 1 to 9, wherein at least one end of the slit (62) extends to an end face of the buffer member (60).

## Patentansprüche

1. Saugvorrichtung (10), umfassend:
eine Aerosolerzeugungseinheit (40);
eine Steuereinheit (30), die ausgebildet ist, um die Aerosolerzeugungseinheit (40) zu steuern;
eine Batterie (21), die ausgebildet ist, um die Aerosolerzeugungseinheit (40) und die Steuereinheit (30) mit Strom zu versorgen;
eine Trennwand (34), die ausgebildet ist, um ein elektrisches Ausrüstungsfach, das elektrische Ausrüstung beherbergt, von einem Batteriefach, das zumindest die Batterie (21) beherbergt, zu trennen; und
ein Pufferelement (60), das ausgebildet ist, um zwischen der Batterie (21) und der Trennwand (34) angeordnet zu werden,
wobei das Pufferelement (60) einen Schlitz (62) einschließt,
wobei die Trennwand (34) ein Durchgangsloch (35) einschließt, das das elektrische Ausrüstungsfach mit dem Batteriefach in Verbindung setzt,
wobei das Durchgangsloch (35) der Trennwand (34) mit dem Schlitz (62) des Pufferelements (60) in Luftverbindung steht, und
wobei der Schlitz (62) ein Einschnitt ist, der sich in Dickenrichtung durch das Pufferelement (60) erstreckt und entlang der Ebene des Pufferelements (60) verläuft.

2. Saugvorrichtung (10) nach Anspruch 1, wobei das Pufferelement (60) so ausgebildet ist, dass es Flüssigkeit absorbieren kann.

3. Saugvorrichtung (10) nach Anspruch 1 oder 2, wobei das Pufferelement (60) ausgebildet ist, sich beim Absorbieren von Flüssigkeit auszudehnen.

4. Saugvorrichtung (10) nach einem der Ansprüche 1 bis 3, wobei der Schlitz (62) mindestens einen Bogen (62a) einschließt.

5. Saugvorrichtung (10) nach einem der Ansprüche 1 bis 4, wobei der Schlitz (62) einen S-förmigen Abschnitt einschließt.

6. Saugvorrichtung (10) nach einem der Ansprüche 1 bis 4, wobei der Schlitz (62) einen zickzackförmigen Abschnitt einschließt.

7. Saugvorrichtung (10) nach einem der Ansprüche 1 bis 6, wobei der Schlitz (62) einen Endabschnitt (62b) einschließt.

8. Saugvorrichtung (10) nach einem der Ansprüche 1 bis 7, wobei das Pufferelement (60) eine geschlossenzellige Struktur einschließt.

9. Saugvorrichtung (10) nach einem der Ansprüche 1 bis 8, wobei eine Breite des Schlitzes (62) 0,7 mm oder mehr und 1,5 mm oder weniger beträgt.

10. Saugvorrichtung (10) nach einem der Ansprüche 1 bis 9, wobei sich mindestens ein Ende des Schlitzes (62) bis zu einer Stirnfläche des Pufferelements (60) erstreckt.

## Revendications

1. Dispositif d'aspiration (10), comprenant :
une unité de génération d'aérosol (40) ;
une unité de commande (30) configurée pour commander l'unité de génération d'aérosol (40) ;
une batterie (21) configurée pour alimenter l'unité de génération d'aérosol (40) et l'unité de commande (30) ;
une paroi de séparation (34) configurée pour séparer un compartiment d'équipement électrique contenant un équipement électrique d'un compartiment de batterie contenant au moins la batterie (21) ; et
un organe tampon (60) configuré pour être disposé entre la batterie (21) et la paroi de séparation (34),
dans lequel l'organe tampon (60) inclut une fente (62),
la paroi de séparation (34) inclut un trou traversant (35) faisant communiquer le compartiment d'équipement électrique avec le compartiment de batterie,
le trou traversant (35) de la paroi de séparation (34) est en communication d'air avec la fente (62) de l'organe tampon (60), et
la fente (62) est une découpe s'étendant à travers l'organe tampon (60) dans la direction d'épaisseur et s'étend le long du plan de l'organe tampon (60).

2. Dispositif d'aspiration (10) selon la revendication 1, dans lequel l'organe tampon (60) est configuré pour être capable d'absorber du liquide.

3. Dispositif d'aspiration (10) selon la revendication 1 ou la revendication 2, dans lequel l'organe tampon (60) est configuré pour se dilater lors de l'absorption de liquide.

4. Dispositif d'aspiration (10) selon l'une quelconque des revendications 1 à 3, dans lequel la fente (62) inclut au moins une courbure (62a).

5. Dispositif d'aspiration (10) selon l'une quelconque des revendications 1 à 4, dans lequel la fente (62) inclut une portion en forme de S.

6. Dispositif d'aspiration (10) selon l'une quelconque des revendications 1 à 4, dans lequel la fente (62) inclut une portion en forme de zigzag.

7. Dispositif d'aspiration (10) selon l'une quelconque des revendications 1 à 6, dans lequel la fente (62) inclut une portion terminale (62b).

8. Dispositif d'aspiration (10) selon l'une quelconque des revendications 1 à 7, dans lequel l'organe tampon (60) inclut une structure à cellules fermées.

9. Dispositif d'aspiration (10) selon l'une quelconque des revendications 1 à 8, dans lequel une largeur de la fente (62) est de 0,7 mm ou plus et de 1,5 mm ou moins.

10. Dispositif d'aspiration (10) selon l'une quelconque des revendications 1 à 9, dans lequel au moins une extrémité de la fente (62) s'étend jusqu'à une face d'extrémité de l'organe tampon (60).
